# EUROPÄISCHE PATENTANMELDUNG

(11) **EP 4 381 953 A1**
(43) Veröffentlichungstag der Anmeldung: **12.06.2024**
(21) Anmeldenummer: 22212044.6
(22) Anmeldetag: 07.12.2022
(51) Int. Cl.: A23G 1/00, A23G 1/32, A23G 1/36, A23G 1/48

(54) **ZUSAMMENSETZUNG FÜR EIN SCHOKOLADEÄHNLICHES PRODUKT, SCHOKOLADEÄHNLICHES PRODUKT UND HERSTELLUNG DER ZUSAMMENSETZUNG**

(71) Anmelder: Delica AG, 5033 Buchs AG (CH)
(72) Erfinder: TÄNNIER, Daniel, 8482 Sennhof (CH)
(74) Vertreter: Hepp Wenger Ryffel AG

(57) **Zusammenfassung**

Zusammensetzung eines schokoladeähnlichen Produktes umfassend wenigstens Pflanzenfett, Traubenkernmehl und Carob-Pulver.

## Beschreibung

Die vorliegende Erfindung betrifft eine Zusammensetzung für ein schokoladeähnliches Produkt, ein schokoladeähnliches Produkt und ein Verfahren zur Herstellung einer Zusammensetzung gemäss den Oberbegriffen der unabhängigen Ansprüche.

Gesunder und lokal produzierter Ernährung kommt in der Gesellschaft und in der Politik eine immer stärkere Bedeutung zu. Insbesondere vor dem Hintergrund, dass durch die Globalisierung mit der weltweiten und saisonal unabhängigen Produktion von Nahrungsmitteln und dem damit einhergehenden Transportwegen ein beachtlicher Anteil an CO₂ produziert wird. So wird auch Kritik an Genussmitteln wie Schokolade laut, da zu deren Herstellung Kakao und vielfach auch Palmöl verwendet wird. Der Anbau erfolgt meist in Monokulturen auf gerodeten Urwaldflächen unter Einsatz aggressiver Pestizide und Düngemittel in Ländern mit unverträglichen Arbeitsbedingungen.

Auf Schokolade will trotzdem niemand verzichten. Schokolade wird weltweit konsumiert und aufgrund des guten Geschmacks auch geschätzt. So wird in den Industrieländern jährlich pro Person über 5 kg Schokolade gegessen.

Verschiedentlich wurde im Stand der Technik bereits Carob-Pulver, also gemahlenes Fruchtfleisch der Früchte des Johannisbrotbaums, in der Nahrungsmittelproduktion eingesetzt. Carob-Pulver weist eine aromatische Süsse auf und hat eine gewisse Ähnlichkeit mit Kakaopulver, hat aber weniger Bitterstoffe. Carob-Pulver enthält Vitamin A und B, Calzium und Eisen. Ausserdem ist Carob frei von anregenden Substanzen wie Koffein oder Theobromin.

Ebenso gibt es bereits Produkte, welche Carob-Pulver anstelle von Kakaopulver verwenden. Auch diese bekannten Produkte unterscheiden sich hinsichtlich Geschmack und Textur von herkömmlicher Schokolade und haben bislang keine grosse Verbreitung gefunden.

Es ist Aufgabe der Erfindung, die Nachteile des Standes der Technik zu überwinden. Insbesondere soll ein schokoladeähnliches Produkt zur Verfügung gestellt werden, welches sich in Textur und Geschmack von herkömmlicher Schokolade nicht oder nur geringfügig unterscheidet und insbesondere auf Kakao-Produkte verzichtet.

Diese Aufgabe wird durch die in den unabhängigen Patentansprüchen definierten Zusammensetzungen, Produkte und Verfahren gelöst. Weitere Ausführungsformen ergeben sich aus den abhängigen Patentansprüchen.

Eine erfindungsgemässe Zusammensetzung eines schokoladeähnlichen Produktes umfasst wenigstens Pflanzenfett, Traubenkernmehl und Carob-Pulver. Durch die Verwendung von Traubenkernmehl enthält das Produkt einen hohen Gehalt an oligomeren Proanthocyanidinen, welchen antioxidative und entzündungshemmende Eigenschaften aufweisen. Ausserdem weist das Carob-Pulver Vitamine auf, welche durch die oligomeren Proanthocyanidine besser vom menschlichen Organismus aufgenommen werden.

Typischerweise weist die Zusammensetzung 30-40 Gew% Pflanzenfett, 3-10 Gew% Traubenkernmehl und 3-10 Gew% Carob-Pulver auf.

Die Zusammensetzung kann im Wesentlichen frei von Kakaobutter und Kakaomasse sein. Somit werden keine Kakaobestandteile benötigt, was den CO₂ Verbrauch durch die wegfallenden Transportwege wesentlich reduziert. Ausserdem ist die Zusammensetzung somit frei von anregenden Substanzen wie Koffein und Theobromin. Ausserdem ist durch das Fehlen von Kakaobutter bei der nachträglichen Verarbeitung der Schritt der Vorkristallisation oder des Temperierens nicht nötig. Die Produktion kann somit wesentlich effizienter erfolgen.

Die Zusammensetzung kann Milchpulver, insbesondere Vollmilchpulver oder Magermilchpulver, oder pulverförmige Milchersatzprodukte, insbesondere getrockneten Hafersirup, Sojamilchpulver oder Reismilchpulver aufweisen. Dabei beträgt der Anteil an Milchpulver oder Milchersatzpulver typischerweise 15-25 Gew%. Durch die Verwendung von Milchersatzpulver kann gänzlich auf tierische Produkte verzichtet werden. Die Zusammensetzung ist vegan und insbesondere auch laktosefrei.

Die Zusammensetzung kann ein Süssungsmittel, insbesondere 15-25 Gew%. umfassen. Das Süssungsmittel kann dabei ein raffinierter Rüben- oder Rohrzucker, insbesondere ein weisser Kristallzucker, Rohzucker oder ein Zuckeraustauschstoff, insbesondere Mönchszucker, Maltit, Erythrit oder Stevia, sein. Ebenso sind aber auch anderes Süssungsmittel denkbar. Durch die Verwendung von Süssungsmittel kann der Geschmack der Zusammensetzung variiert werden.

Wenn die Zusammensetzung keinen Hafersirup und/oder kein Süssungsmittel enthält, erhöhen sich die Anteile von Fett, Carob-Pulver und Traubenkernmehl entsprechend.

Die Zusammensetzung kann weiter ein Mittel zur Einstellung der Rheologie, insbesondere ein Lezithin, beispielsweise Soja-, Raps- oder Sonnenblumenlezithin, umfassen. Durch die Verwendung von Raps- oder Sonnenblumenlezithin kann wiederum auf eine lokale Produktion mit kurzen Transportwegen und entsprechend geringerer CO₂ Belastung gesetzt werden.

Das Pflanzenfett kann im Wesentlichen ein Fett hergestellt mittels Fermentation sein, insbesondere ausgewählt aus der Gruppe umfassend Kokosfett, Rapsöl, Palmfett, Sheabutter, oder eine Mischung davon. Es sind aber auch Mischungen anderer pflanzlichen Fette denkbar, insbesondere Fette, welche mit oleagenen Hefen hergestellt werden.

Die Zusammensetzung kann im Wesentlichen frei sein von Palmöl und/oder Palmfett. Durch den Verzicht von Palmöl und Palmfett kann die CO₂ Belastung weiter gesenkt werden.

Das Traubenkernmehl kann ein Mahlgut aus vorzugsweise kaltgepressten, getrockneten und gemahlenen Traubenkernen sein. Die Kaltpressung ist ein besonders schonendes Verfahren, bei welchem die für die Ernährung und den Geschmack wichtigen Inhaltsstoffe der Traubenkerne erhalten bleiben. Der Mahlgrad oder die Partikelgrössenverteilung ist für das Vermahlen bzw. die weitere Verarbeitung des Traubenkernmehls nicht weiter relevant, da bei der Herstellung der Zusammensetzung ein Walzen auf eine gewünschte Endfeinheit erfolgt. Vorzugsweise wird aber ein Traubenkernmehl verwendet mit einer Partikelgrössenverteilung mit D₉₀ <500 µm.

Das Carob-Pulver kann ein Mahlgut aus vorzugsweise getrocknetem und vorzugsweise geröstetem Fruchtfleisch der Früchte des Johannisbrotbaums sein. Durch das Rösten des Fruchtfleisches kann die geschmackliche Ausrichtung des Carob-Pulvers und somit auch der Zusammensetzung variiert werden. Der Mahlgrad oder die Partikelgrössenverteilung ist für das Vermahlen bzw. die weitere Verarbeitung des Carob-Pulvers nicht weiter relevant, da bei der Herstellung der Zusammensetzung ein Walzen auf eine gewünschte Endfeinheit erfolgt. Vorzugsweise wird aber ein Carob-Pulver verwendet mit einer Partikelgrössenverteilung mit D₉₀ <500 µm.

Ein weiterer Aspekt der vorliegenden Erfindung ist ein schokoladeähnliches Produkt erhältlich durch Verarbeiten der Zusammensetzung wie vorgängig beschreiben. Dabei kann das Produkt die Form von Tafeln, Pralinen, Füllungen, Confiserie-Produkten, Hohlkörpern, Dragées, Pellets und Pulver, insbesondere lösliche Pulver aufweisen. Es sind aber auch andere Formen denkbar.

Das Produkt kann eine Feinheit von kleiner oder gleich 20 µm aufweisen. Somit wird die Textur im Gaumen als angenehm empfunden. Dabei bezieht sich die Feinheit ausschliesslich auf die Zusammensetzung der Grundmasse des Produktes.

Das Produkt kann weitere Zusätze, insbesondere Nüsse, Mandeln, Kernen, Früchte, Gewürze und Getreide aufweisen. Es versteht sich von selbst, dass dann die Feinheit für diese Zusätze nicht erreicht werden kann. Es ist beispielsweise gewünscht, dass das schokoladenähnliche Produkt grössere Nüsse oder Früchte enthält.

Ein weiterer Aspekt der vorliegenden Erfindung ist ein Verfahren zur Herstellung einer Zusammensetzung für ein schokoladeähnliches Produkt, insbesondere einer Zusammensetzung wie vorgängig beschrieben. Dabei umfasst das Verfahren die Schritte:
- Mischen von wenigstens Pflanzenfett, getrockneten und gemahlenen Traubenkerne und Carob-Pulver,
- Walzen der Mischung auf eine Endfeinheit von maximal 20 µm,
- Conchieren der Mischung, insbesondere zwischen 2 bis 8 Stunden,
   oder Plastifizieren der Mischung in einem Mischer,
- Verflüssigen der Mischung durch Zugabe von Pflanzenfetten,
- Einstellen der Rheologie mittels Zugabe von Lezithin.

Beim Walzen der Mischung werden die beigefügten Partikel der Mischung auf eine Grösse von maximal 20 µm verringert, sodass eine homogene Masse resultiert.

Das Conchieren der Mischung erfolgt in einem Verfahren wie es bereits in der Schokoladenproduktion bekannt ist in Conchen, bei einer Temperatur von ca. 50 °C. Ebenso ist es aber auch möglich, das Vermischen in einem Mischer durchzuführen, so dass die resultierende Masse gleichmässig plastifiziert ist.

Im Schritt des Verflüssigens wird der Restanteil des benötigten Pflanzenfetts zugegeben. Dabei wird etwa 50 % des Pflanzenfetts bereits beim Mischen zugegeben und die verbleibenden 50 % erst beim Conchieren oder Plastifizieren.

Die Einstellung der Rheologie der Zusammensetzung erfolgt abhängig vom Verwendungszweck der Zusammensetzung. Sollen aus der Zusammensetzung Hohlkörper hergestellt werden, wird eine dünnflüssigere Zusammensetzung gewählt. Bei der weiteren Verarbeitung beispielsweise zu Tafeln wird eine dickflüssigere Zusammensetzung benötigt.

Das Verfahren kann auch den Schritt des Zugebens von Milchpulver oder pulverförmigen Milchersatzprodukten umfassen, wobei diese Zugabe vorzugsweise vor dem Walzen erfolgt. Durch die Verwendung von pulverförmigen Milchersatzprodukten kann gänzlich auf tierische Produkte verzichtet werden. Die Zusammensetzung ist vegan und insbesondere auch laktosefrei.

Das Verfahren kann auch den Schritt des Zugebens eines Süssungsmittels umfassen. Das Süssungsmittel kann dabei ein raffinierter Rüben- oder Rohrzucker, insbesondere ein weisser Kristallzucker, Rohzucker oder ein Zuckeraustauschstoff, insbesondere Mönchszucker, Maltit, Erythrit oder Stevia, sein. Ebenso sind aber auch anderes Süssungsmittel denkbar. Durch die Verwendung von Süssungsmittel kann der Geschmack der Zusammensetzung variiert werden.

### Beispiel:

Es wurde ein schokoladeähnliches Produkt hergestellt mit der folgenden Zusammensetzung:

| | |
|---|---|
| Pflanzenfett: | 35.2% |
| Zucker: | 34.2% |
| Hafersirup getrocknet: | 19.2% |
| Traubenkerne getrocknet, gemahlen: | 5.8% |
| Carob-Pulver: | 5.4% |
| Sonnenblumenlezithin: | 0.2% |

Diese Zusammensetzung wurde in eine Tafelform gegeben und ausgehärtet. Das entstandene schokoladeähnliche Produkt wies nahezu dieselben Eigenschaften auf, wie eine herkömmliche Milchschokolade. Insbesondere das Schmelzverhalten, die Sensorik im Gaumen und das Brechverhalten waren identisch.

## Patentansprüche

1. Zusammensetzung eines schokoladeähnlichen Produktes umfassend wenigstens:
- Pflanzenfett, insbesondere 30-40 Gew%,
- Traubenkernmehl, insbesondere 3-10 Gew%, und
- Carob-Pulver, insbesondere 3-10 Gew%.

2. Zusammensetzung nach Anspruch 1, wobei die Zusammensetzung im Wesentlichen keine Kakobutter und keine Kakaomasse aufweist.

3. Zusammensetzung nach Anspruch 1 oder 2, weiter umfassend Milchpulver, insbesondere Vollmilchpulver oder Magermilchpulver, oder pulverförmige Milchersatzprodukte, insbesondere getrockneten Hafersirup, Sojamilchpulver oder Reismilchpulver, insbesondere 15-25 Gew%.

4. Zusammensetzung nach einem der vorhergehenden Ansprüche, weiter umfassend ein Süssungsmittel, insbesondere 15-25 Gew%.

5. Zusammensetzung nach Anspruch 4, wobei das Süssungsmittel ein raffinierter Rüben- oder Rohrzucker, insbesondere ein weisser Kristallzucker, Rohzucker oder ein Zuckeraustauschstoff, insbesondere Mönchszucker, Maltit, Erythrit oder Stevia, ist.

6. Zusammensetzung nach einem der vorhergehenden Ansprüche, weiter umfassend ein Mittel zur Einstellung der Rheologie, insbesondere ein Lezithin, vorzugsweise Soja-, Raps- oder Sonnenblumenlezithin.

7. Zusammensetzung nach einem der vorhergehenden Ansprüche, wobei das Pflanzenfett im Wesentlichen ein Fett hergestellt mittels Fermentation ist, insbesondere ausgewählt aus der Gruppe umfassend Kokosfett, Rapsöl, Palmfett, Sheabutter, oder eine Mischung davon.

8. Zusammensetzung nach einem der vorhergehenden Ansprüche, wobei die Zusammensetzung im Wesentlichen kein Palmöl oder Palmfett aufweist.

9. Zusammensetzung nach einem der vorhergehenden Ansprüche, wobei das Traubenkernmehl ein Mahlgut aus vorzugsweise kaltgepressten, getrockneten und gemahlenen Traubenkernen ist.

10. Zusammensetzung nach einem der vorhergehenden Ansprüche, wobei das Carob-Pulver ein Mahlgut aus vorzugsweise getrocknetem und vorzugsweise geröstetem Fruchtfleisch der Früchte des Johannisbrotbaums ist.

11. Schokoladeähnliches Produkt erhältlich durch Verarbeiten der Zusammensetzung nach einem der vorhergehenden Ansprüche, insbesondere in Form von Tafeln, Pralinen, Füllungen, Confiserie-Produkten, Hohlkörpern, Dragées, Pellets und Pulver, insbesondere lösliche Pulver.

12. Produkt nach Anspruch 11, wobei das Produkt eine Feinheit von kleiner oder gleich 20 µm aufweist.

13. Produkt nach einem der Ansprüche 11 oder 12, wobei das Produkt weitere Zusätze, insbesondere Nüsse, Mandeln, Kernen, Früchte, Gewürze und Getreide aufweisen kann.

14. Verfahren zur Herstellung einer Zusammensetzung für ein schokoladeähnliches Produkt, insbesondere nach einem der Ansprüche 1 bis 10, umfassend die Schritte:
- Mischen von wenigstens Pflanzenfett, getrocknete und gemahlene Traubenkerne und Carob-Pulver,
- Walzen der Mischung auf eine Endfeinheit von maximal 20 pm,
- Conchieren der Mischung, insbesondere zwischen 2 bis 8 Stunden,
oder Plastifizieren der Mischung in einem Mischer,
- Verflüssigen der Mischung durch Zugabe von Pflanzenfetten,
- Einstellen der Rheologie mittel Zugabe von Lezithin, insbesondere Sonnenblumenlezithin.

15. Verfahren nach Anspruch 14, weiter umfassend das Zugeben von Milchpulver oder pulverförmigen Milchersatzprodukten, vorzugsweise vor dem Walzen.

16. Verfahren nach Anspruch 14 oder 15, weiter umfassend das Zugeben eines Süssungsmittels, vorzugsweise vor dem Walzen.

17. Verfahren nach Anspruch 16, wobei das Süssungsmittel ein raffinierter Rüben- oder Rohrzucker, insbesondere ein weisser Kristallzucker, Rohzucker oder ein Zuckeraustauschstoff, insbesondere Mönchszucker, Maltit, Erythrit oder Stevia, ist.
